# FASCICULE DE BREVET EUROPEEN

(11) **EP 3 303 007 B1**
(45) Date de publication et mention de la délivrance du brevet: **02.10.2019**
(21) Numéro de dépôt: 16724647.9
(22) Date de dépôt: 24.05.2016
(51) Int. Cl.: B60C 11/03

(54) **BANDE DE ROULEMENT AMELIOREE POUR PNEU**
VERBESSERTE REIFENLAUFFLÄCHE
IMPROVED TYRE TREAD

(30) Priorité: 28.05.2015 FR 1554803
(43) Date de publication de la demande: 11.04.2018
(73) Titulaire: Compagnie Générale des Etablissements Michelin, 63000 Clermont-Ferrand (FR)
(72) Inventeur: GAYTON, Christophe, 63040 Clermont-Ferrand Cedex 9 (FR); DIENG, Saliou, 63040 Clermont-Ferrand Cedex 9 (FR)
(74) Mandataire: Diernaz, Christian
(86) Numéro de dépôt international: PCT/EP2016/061714
(87) Numéro de publication internationale: WO 2016/189006

(56) Documents cités:
- EP-A2- 0 335 694
- WO-A1-2010/030276
- WO-A1-2011/098404
- WO-A1-2011/135000

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau présente par temps de pluie sur la chaussée sont rendues plus pérennes, ces bandes de roulement ayant en outre des performances améliorées en vitesse d'usure.

### ÉTAT DE LA TECHNIQUE

De façon connue, l'utilisation de pneus dans des conditions de roulage par temps de pluie requiert une élimination rapide de l'eau présente dans la région de contact du pneu avec la chaussée afin d'assurer un contact du matériau constituant la bande de roulement avec cette chaussée. L'eau qui n'est pas repoussée sur l'avant du pneu s'écoule ou est captée en partie dans les rainures formées dans la bande de roulement du pneu.

Ces rainures forment un réseau d'écoulement qui se doit d'être pérenne c'est-à-dire être efficace pendant toute la durée d'usage d'un pneu entre son état neuf et son retrait pour cause d'usure atteignant la limite fixée par la réglementation.

Pour les pneus destinés aux essieux directeur ou porteur d'un véhicule poids lourd, il est usuel de former, dans la bande de roulement de ces pneus, des rainures circonférentielles (ou longitudinales) dont la profondeur est égale à l'épaisseur totale de la bande de roulement (cette épaisseur totale ne prenant pas en compte l'épaisseur éventuellement prévue pour permettre un renouvellement partiel des rainures par une opération dite de recreusage - « regrooving » en anglais). Ainsi, il est possible d'obtenir une bande de roulement ayant une performance en drainage de l'eau qui est toujours au-dessus d'une performance minimale dite performance de sécurité et cela quel que soit le niveau de l'usure de cette bande.

Pour les pneus de l'état de la technique, le volume total de creux est en règle générale au moins égal à 10% et au plus égal à 25% du volume total de la bande de roulement destiné à être usé au cours du roulage (le volume total correspondant au volume de matière auquel est ajouté ledit volume total de creux). On constate que ces pneus ont un volume de creux disponible dans l'aire de contact qui est relativement important à l'état neuf (volume de creux disponible signifiant que ce volume est potentiellement susceptible d'être rempli en partie ou en totalité par l'eau présente sur la chaussée). Le volume de creux s'ouvrant sur la surface de roulement dans le contact est évalué lorsque le pneu est soumis à ses conditions usuelle de gonflage et d'écrasement en statique telles que définies notamment par le standard E.T.R.T.O. pour l'Europe.

Si des rainures ou plus généralement des cavités sont indispensables au drainage de l'eau dans la région de contact avec une chaussée, la diminution de matière qui en résulte sur la bande peut affecter sensiblement la performance en usure de cette bande et en conséquence réduire la durée d'utilisation du pneu résultant d'une augmentation de la vitesse d'usure de ladite bande. D'autres performances du pneu peuvent aussi être affectées et notamment les performances en comportement, en bruit émis en roulage, en résistance au roulement. Il est également observé que ces rainures, formées pour avoir une profondeur utile égale à la hauteur de bande à user, peuvent être la cause de problèmes d'endurance. Dans certaines conditions de roulage, des objets étrangers comme des cailloux peuvent être capturés dans ces rainures et venir blesser le fond de ces rainures et générer l'apparition de cassures dans le caoutchouc.

La réalisation d'une pluralité de rainures sur une bande de roulement a donc pour inconvénient de réduire la quantité de matière de bande pour une largeur donnée de bande et par voie de conséquence de réduire la durée d'utilisation du pneu à cause d'une vitesse d'usure trop élevée.

Par ailleurs, les rainures génèrent un abaissement des rigidités de compression et de cisaillement puisque ces rainures délimitent des portions de matière sensibles à la déformation comparativement aux portions délimitées par des incisions. En effet, dans le cas d'une incision, les parois de matière délimitant cette incision peuvent venir en contact l'une sur l'autre au moins en partie lors du passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Pour limiter l'abaissement de rigidité liée à la présence des rainures nécessitée par le besoin d'assurer le drainage de l'eau, il a été proposé une solution décrite dans la publication de brevet WO 2011/039194. Selon cette solution, il est proposé une bande de roulement pour pneu ayant une épaisseur E, cette bande étant pourvue d'une pluralité de rainures discontinues sur la surface de roulement et ayant une géométrie ondulant dans l'épaisseur de la bande. Chaque rainure ondulante est discontinue en surface mais continue à neuf dans l'intérieur de la bande afin de permettre un écoulement de fluide. Cette rainure ondulante est formée dans la bande de roulement par une succession de cavités externes s'ouvrant sur la surface de roulement à neuf et une pluralité de cavités internes, ces dernières étant placées radialement et en totalité à l'intérieur de la surface de roulement à l'état neuf entre les cavités externes. Les cavités internes peuvent être prévues pour être à des profondeurs différentes à l'intérieur de la bande.

En outre, la continuité de l'écoulement d'eau dans chaque rainure ondulante à neuf est assurée par la présence de cavités de liaison, chaque cavité de liaison reliant une cavité externe à une cavité interne. Chaque cavité de liaison a deux extrémités, l'une de ces extrémités étant connectée à une cavité interne d'une part et l'autre extrémité étant connectée à une cavité externe d'autre part. Chaque cavité de liaison présente des sections transversales (dans un plan de coupe perpendiculaire à la direction moyenne de la rainure) dont les aires sont différentes de zéro et sont égales respectivement aux aires des sections transversales des cavités interne et externe reliées par cette cavité de liaison.

Grâce à la présence de ces cavités de liaison, il est possible d'assurer une circulation de l'eau d'une cavité externe vers une cavité interne et ainsi d'obtenir un meilleur drainage de l'eau en réduisant les pertes de charges hydrodynamiques.

De plus grâce à cette structure de bande de roulement, on obtient un volume de creux approprié et réduit par rapport à celui des rainures usuelles tout en réalisant un drainage satisfaisant à neuf. Ce type de rainure permet de limiter la diminution de rigidité de la bande de roulement à l'état neuf, cette diminution étant liée à la présence de cavités ou creux dans la bande.

Dans le présent document, la terminologie « cavité ondulante» ou « rainure ondulante » dans la profondeur d'une bande de roulement désigne toute cavité ou rainure ayant une géométrie variable dans la profondeur de la bande et s'ouvrant de façon discontinue sur la surface de roulement de la bande soit à neuf soit après une usure partielle. Cette rainure ondulante dès lors qu'elle est ouverte au moins en partie sur une surface de roulement par des parties externes forme une rainure permettant une circulation de liquide et à tout le moins un captage temporaire de liquide, les parties externes étant reliées aux parties internes. Une rainure ondulante peut s'étendre sur plus de deux niveaux successifs dans l'épaisseur de la bande de roulement. Une rainure ondulante peut suivre une géométrie globalement longitudinale (c'est-à-dire orientée selon la direction circonférentielle sur le pneu) ou toute autre direction oblique par rapport à cette direction longitudinale.

Ce même document WO 2011/039194 décrit une bande comprenant une première pluralité de rainures ondulantes entre une première couche d'usure et une deuxième couche d'usure selon une première direction et une deuxième pluralité de rainures ondulantes dans les mêmes couches d'usure et dirigées dans une deuxième direction croisant la première direction pour former un réseau de rainures croisées. Ces première et deuxième pluralités de rainures sont agencées de manière que les cavités internes de ces première et deuxième pluralités de rainures soient connectées entre elles afin de renforcer l'effet de réseau.

Les documents EP 0335694-A2 et WO 2010/030276 A1 montrent des pneus dont les bandes de roulement sont pourvues de rainures ouvertes sur la surface de roulement de la bande à neuf et d'incisions comprenant des parties élargies en formant de petites rainures cylindriques d'orientation radiale ouvertes sur la surface de roulement à neuf. Ces incisions suivent un tracé en zigzag formant des pointes, chaque pointe comportant une petite rainure cylindrique.

Afin d'optimiser le fonctionnement d'une bande pourvue d'au moins une rainure ondulante dans l'épaisseur, il a été prévu de former au moins une rainure non ondulante dans l'épaisseur, cette rainure s'ouvrant sur la surface de roulement de la bande de roulement dès l'état neuf et sur toute sa longueur.

Il a été constaté que la combinaison d'une rainure ondulante avec une rainure ouverte sur toute sa longueur sur la surface de roulement d'une bande à l'état neuf peut conduire à des usures irrégulières, c'est-à-dire à des usures qui ne se répartissent pas de façon homogène sur la surface de roulement. Ces usures irrégulières peuvent conduire au remplacement prématuré du pneu.

Dans l'art antérieur, il a en outre été proposé une rainure discontinue, décrite notamment dans le document EP 1341679 B1, selon laquelle les parties ouvertes sur la surface de roulement à neuf ne sont pas reliées à des parties cachées présentes sous la surface de roulement par des parties de liaison mais uniquement par des incisions. Dans cette configuration, il n'y a pas ou très peu de circulation de liquide d'une partie ouverte vers une partie cachée.

Il a également été constaté que la combinaison d'une rainure discontinue de ce type avec une rainure principale ouverte sur toute sa longueur sur la surface de roulement d'une bande à l'état neuf peut conduire à des usures irrégulières, c'est-à-dire à des usures qui ne se répartissent pas de façon homogène sur la surface de roulement.

### Définitions :

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale de matière à user en roulage, cette épaisseur maximale de matière à user étant inférieure à l'épaisseur totale E.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.R.T.O..

Une rainure est dite continue dès lors qu'elle est ouverte sur la surface de roulement à neuf et cela sur toute son étendue.

Une rainure est dite discontinue dès lors qu'elle est formée d'une succession de parties ouvertes sur la surface de roulement à neuf, ces parties étant disjointes les unes des autres dans la direction principale de cette rainure (c'est à dire son étendue).

La surface moyenne d'une rainure continue ou discontinue est définie comme une surface virtuelle divisant cette rainure, dans la direction principale de cette rainure, en deux parties égales ou sensiblement égales.

La direction principale d'une rainure correspond à la direction d'un écoulement d'eau dans la rainure lors d'un roulage sur une chaussée revêtue d'eau.

### BREF EXPOSE DE L'INVENTION

La présente invention vise à obtenir une bonne performance de roulage par temps de pluie tout en proposant un dessin de sculpture de bande de roulement amélioré en usure et plus particulièrement réduisant les risques d'usure irrégulière.

À cet effet, l'invention a pour objet une bande de roulement de pneu comprenant une surface de roulement destinée à venir en contact avec une chaussée, cette bande de roulement ayant une épaisseur totale E et comprenant :
- au moins une rainure principale s'ouvrant sur toute sa longueur à l'état neuf sur la surface de roulement de la bande, cette rainure ayant une profondeur totale P au plus égale à l'épaisseur totale E, une surface moyenne divisant la rainure en deux moitiés égales, et au voisinage de cette rainure principale,
- au moins une rainure secondaire discontinue s'étendant dans l'épaisseur de la bande jusqu'à une profondeur égale ou voisine de la profondeur P de la rainure principale, cette rainure secondaire discontinue présentant une pluralité de parties cachées sous la surface de roulement à neuf et une pluralité de parties ouvertes (21) ouvertes sur la surface de roulement à neuf, ces parties ouvertes étant disjointes les unes des autres sur la surface de roulement à neuf, cette rainure secondaire discontinue (2) ayant une surface moyenne divisant ladite rainure en deux moitiés égales,
- la rainure principale et la rainure secondaire discontinue ayant des directions principales globalement identiques.

Cette bande de roulement est telle que toutes les parties ouvertes de la rainure secondaire discontinue sont à une distance moyenne L1 de la rainure principale, cette distance L1 étant mesurée au niveau des parties ouvertes entre la surface moyenne de la rainure principale et la surface moyenne de la rainure secondaire discontinue, cette distance L1 étant inférieure à la distance moyenne L2 mesurée entre la surface moyenne de la rainure principale et la surface moyenne de la rainure discontinue dans les régions dépourvues de parties ouvertes de la rainure secondaire discontinue.

Les parties cachées de la rainure secondaire discontinue en surface sont destinées à former de nouvelles rainures ouvertes sur la surface de roulement.

De la sorte, on génère une variation régulière de la distance entre la surface moyenne de la rainure principale continue et celle de la rainure secondaire discontinue de manière à réduire le volume de matière situé entre cette rainure principale et chaque partie ouverte de la rainure secondaire discontinue.

Préférentiellement, la différence entre les distances L2 et L1 est au moins égale à 20% de la largeur moyenne des parties ouvertes de la rainure secondaire discontinue et encore plus préférentiellement au moins égale à 30%.

Si on note R la distance moyenne entre les parties ouvertes à neuf d'une rainure secondaire discontinue et L la longueur moyenne de chaque partie ouverte d'une rainure secondaire discontinue, alors la longueur L est au moins égale à la moitié de la distance R.

Encore plus préférentiellement, la longueur L est égale à ou proche de la distance R.

Dans une variante particulièrement intéressante, la rainure secondaire discontinue est une rainure ondulante formée d'une pluralité de parties ouvertes à neuf sur la surface de roulement de la bande et d'une pluralité de parties cachées, ces parties cachées étant reliées aux parties ouvertes par des parties de liaison pour permettre l'établissement d'un flux de fluide dans la rainure secondaire discontinue par temps de pluie, cette rainure ondulante s'étendant dans la profondeur jusqu'à une profondeur égale ou voisine de la profondeur de la rainure principale. Ce type de rainure ondulante définit plusieurs niveaux d'usure caractérisés chacun par une répartition propre de creux sur la surface de roulement.

Grâce à cette disposition avantageuse, il est possible d'obtenir une meilleure maîtrise des mouvements de matière lors du moulage de la bande de roulement entre la rainure ondulante et la rainure principale et grâce à cela il devient possible de limiter l'usure irrégulière générée par des quantités de matière non uniformément réparties notamment dans la direction de l'épaisseur de la bande de roulement.

Selon une autre variante de l'invention, il est combiné dans une bande de roulement la présence d'une rainure principale et de deux rainures discontinues ondulantes, ces trois rainures ayant une même direction principale, la rainure principale étant formée entre les deux rainures discontinues ondulantes, ces deux rainures discontinues ondulantes étant déphasées l'une par rapport à l'autre afin que leurs parties ouvertes sur la surface de roulement soient décalées les unes par rapport aux autres dans la direction principale de ces rainures discontinues ondulantes.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue surfacique d'une première variante de bande de roulement selon l'invention ;
La figure 2 montre une vue en coupe de la bande montrée avec la figure 1 selon un plan de coupe dont la trace est repérée par la ligne II-II ;
La figure 3 montre une vue en coupe de la bande montrée avec la figure 1 selon un plan de coupe dont la trace est repérée par la ligne III-III ;
La figure 4 représente une vue surfacique d'une deuxième variante de bande de roulement selon l'invention ;
La figure 5 montre une vue surfacique partielle d'une troisième variante de l'invention ;
La figure 6 montre une coupe selon un plan VI-VI repéré par sa trace sur la figure 5.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

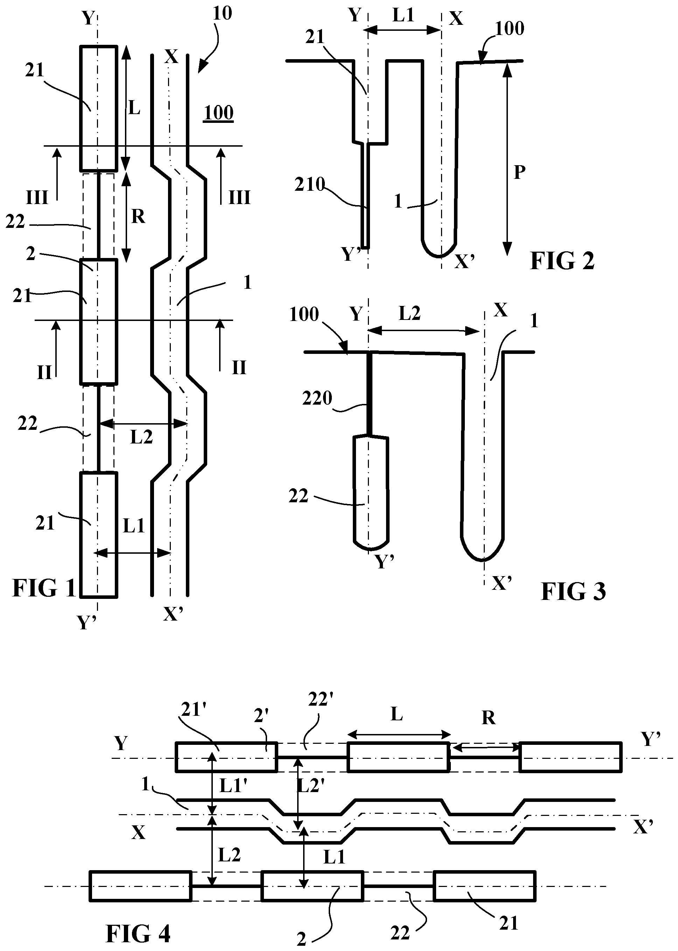

La figure 1 représente une vue partielle d'une première variante de bande de roulement 10 de pneu pour poids lourd selon l'invention. La bande a une épaisseur totale E, cette épaisseur étant supérieure à la hauteur maximale de matière à user en roulage avant de devoir changer de pneu.

Selon cette variante, une première rainure principale 1 continue s'ouvre sur toute sa longueur sur la surface de roulement 100 de la bande de roulement 10 à neuf. Cette première rainure 1 a une largeur moyenne et une profondeur P appropriée pour être présente sur la bande de roulement jusqu'à atteindre la limite d'usure de cette bande. La profondeur P de cette rainure est au plus égale à l'épaisseur E de la bande 10. D'une façon globale, cette rainure 1 s'étend dans la direction circonférentielle sur le pneu.

Au voisinage de cette rainure principale continue 1, il est formé une rainure secondaire discontinue 2 ondulante dans l'épaisseur de la bande. Cette rainure discontinue 2 s'étend dans l'épaisseur de la bande jusqu'à une profondeur maximale égale ou voisine de la profondeur P de la rainure principale comme cela est montré avec les figures 2 et 3. Cette rainure discontinue 2 est discontinue sur la surface de roulement 100 en ce qu'elle présente une pluralité de parties ouvertes 21 de longueur moyenne L séparées les unes des autres dans la direction circonférentielle par une distance R. En outre, ces parties ouvertes 21 sont connectées deux à deux entre elles par une pluralité de parties cachées 22 formées sous la surface de roulement à neuf 100.

Cette rainure secondaire discontinue 2 comporte une surface moyenne divisant ladite rainure en deux moitiés égales, cette surface moyenne coupant le plan de la figure 1 selon une ligne indiquée par la référence YY'. De même la rainure principale continue 1 comprend une surface moyenne divisant ladite rainure en deux moitiés égales, cette surface moyenne coupant le plan de la figure 1 selon une ligne indiquée par la référence XX'

L'invention consiste à adapter la géométrie de la rainure 1 ouverte sur toute sa longueur de telle sorte que la distance entre les surfaces moyennes de la rainure ouverte et la rainure discontinue et ondulante soit variable et fonction des parties ouvertes.

La première rainure 1 ouverte sur toute sa longueur sur la surface de roulement 100 est disposée au voisinage de la rainure ondulante 2 de manière que la distance moyenne L1, distance mesurée au droit des parties ouvertes 21 entre la surface moyenne XX' de la rainure principale continue 1 et la surface moyenne YY' de la rainure discontinue 2, est inférieure à la distance moyenne L2 mesurée entre la surface moyenne XX' de la rainure principale 1 et la surface moyenne YY' de la rainure discontinue 2 dans les régions dépourvues de parties ouvertes 21 de la rainure discontinue 2.

Sur la figure 2 on a représenté une coupe de la bande de roulement montrée avec la figure 1 suivant un plan dont la trace suit la ligne II-II sur cette figure 1.

On voit que la rainure continue 1 a une même profondeur que la rainure discontinue 2 dont on a représenté la partie proche de la surface de roulement sous forme d'une cavité ouverte 21, cette cavité ouverte 21 se prolongeant à l'intérieur par une incision 210 se terminant à une même profondeur que la rainure continue 1. En outre, la distance entre les surfaces moyennes XX' et YY' est L1 sur cette coupe.

Sur la figure 3, on a représenté une coupe de la bande de roulement montrée avec la figure 1 suivant un plan dont la trace suit la ligne III-III sur cette figure 1.

On voit que la rainure discontinue 2 comprend sur cette coupe une incision 221 se prolongeant par un creux caché 22 destiné à former une nouvelle rainure après usure partielle. En outre la distance entre les surfaces moyennes est L2 sur cette coupe ; cette distance L2 est supérieure à la distance L1.

La variante qui vient d'être décrite pour la dimension de pneu 295/80R22.5 présente les caractéristiques suivantes :
L = 60 mm
R = 60 mm
P = 13 mm
Largeur des rainures = 10 mm
Ecart des distances = (L2-L1) = 3 mm

Il est préférable que l'écart de distance entre les surfaces moyennes soit au moins égal à 20% de la largeur moyenne des rainures.

Sur la figure 4, un autre mode de réalisation d'une bande de roulement selon l'invention a été représenté. Dans ce mode, une rainure continue 1 et deux rainures discontinues ondulantes 2, 2'. La rainure continue 1 est formée de manière à avoir une géométrie zigzagante sur la surface de roulement à neuf 100. Les rainures discontinues 2, 2' sont placées de manière à respecter la règle sur les distances entre les surfaces moyennes telle qu'exprimé dans l'invention, à savoir que les parties ouvertes 21, 21', respectivement, sur la surface de roulement à neuf sont plus proches de la rainure continue 1 que les parties cachées 22, 22', respectivement, de la même rainure continue 1. Ce qui se traduit par les relations suivantes : L1 < L2 et L1'< L2'.

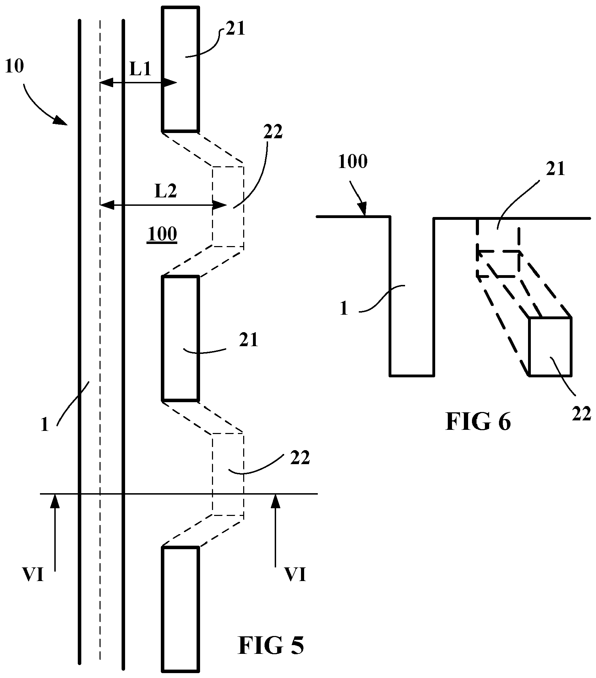

La figure 5 montre une troisième variante d'une bande de roulement selon l'invention. Dans cette variante, une rainure continue 1 est rectiligne et est voisine d'une rainure discontinue ondulante 2 dans la profondeur de la bande 10. Cette rainure discontinue 2 comprend des parties ouvertes 21 sur la surface de roulement 100 et des parties cachées 22, ces parties cachées étant décalées latéralement par rapport au plan moyen de la rainure continue 1. Ainsi les volumes de matière entre les deux rainures sont réduits au niveau des parties ouvertes sur la surface de roulement à neuf comparativement aux volumes au niveau des parties cachées.

La figure 6 montre une coupe selon un plan dont la trace est marquée par la ligne VI-VI sur la figure 5. On voit que la distance L1 séparant une partie ouverte 21 est inférieure à la distance L2 séparant la partie cachée 22.

L'invention concerne également un pneu pourvu d'une bande de roulement telle que décrite et encore plus particulièrement un pneu destiné à équiper l'essieu directeur d'un véhicule poids lourd.

Bien entendu, l'invention n'est pas limitée aux exemples décrits et représentés et diverses modifications peuvent y être apportées sans sortir du cadre tel que défini par les revendications. Notamment, ce qui a été décrit avec une première rainure et une deuxième rainure pourrait aisément se concevoir avec plus de deux rainures formées de part et d'autre d'une rainure ondulante dans l'épaisseur d'une bande de roulement.

## Revendications

1. Bande de roulement (10) de pneu comprenant une surface de roulement (100) destinée à venir en contact avec une chaussée, cette bande de roulement (10) ayant une épaisseur totale E et comprenant :
- au moins une rainure principale (1) s'ouvrant sur toute sa longueur à l'état neuf sur la surface de roulement (100) de la bande, cette rainure ayant une profondeur totale P au plus égale à l'épaisseur totale E de la bande, et au voisinage de cette rainure principale,
- au moins une rainure secondaire discontinue (2) s'étendant dans l'épaisseur de la bande jusqu'à une profondeur égale ou voisine de la profondeur P de la rainure principale (1), cette rainure secondaire discontinue (2) présentant une pluralité de parties cachées (22) sous la surface de roulement à neuf et une pluralité de parties ouvertes (21) ouvertes sur la surface de roulement à neuf, ces parties ouvertes étant disjointes les unes des autres sur la surface de roulement à neuf,
- la rainure principale (1) et la rainure secondaire discontinue (2) ayant respectivement chacune une surface moyenne définie comme une surface virtuelle divisant cette rainure, dans la direction principale de cette rainure, en deux parties égales ou sensiblement égales,
- la rainure principale (1) et la rainure secondaire discontinue (2) ayant des directions principales globalement identiques,
cette bande de roulement étant **caractérisée en ce que** toutes les parties ouvertes (21) de la rainure secondaire discontinue (2) sont à une distance moyenne L1 de la rainure principale (1), cette distance L1 étant mesurée au niveau des parties ouvertes (21) entre la surface moyenne de la rainure principale (1) et la surface moyenne de la rainure secondaire discontinue (2), cette distance L1 est inférieure à la distance moyenne L2 mesurée entre la surface moyenne de la rainure principale (1) et la surface moyenne de la rainure discontinue (2) dans les régions dépourvues de parties ouvertes de la rainure secondaire discontinue (2).

2. Bande de roulement de pneu selon la revendication 1 **caractérisée en ce que** la différence entre les distances L2 et L1 est au moins égale à 20% de la largeur moyenne des parties ouvertes (21) de la rainure secondaire discontinue (2) et encore plus préférentiellement au moins égale à 30%.

3. Bande de roulement de pneu selon la revendication 1 ou la revendication 2 **caractérisée en ce que** si on note R la distance entre les parties ouvertes (21) à neuf d'une rainure secondaire discontinue (2), et L la longueur moyenne de chaque partie ouverte (21) d'une rainure secondaire discontinue (2), alors la longueur L est au moins égale à la moitié de la distance R.

4. Bande de roulement de pneu selon la revendication 3 **caractérisée en ce que** la longueur L est égale à ou proche de la distance R.

5. Bande de roulement de pneu selon l'une des revendications 1 à 4 **caractérisée en ce que** la rainure secondaire discontinue (2) est une rainure ondulante formée d'une pluralité de parties ouvertes (21) à neuf sur la surface de roulement (100) de la bande et d'une pluralité de parties cachées (22), ces parties cachées (22) étant reliées aux parties ouvertes (21) par des parties de liaison pour permettre à neuf l'établissement d'un flux de fluide dans la rainure secondaire discontinue (2) par temps de pluie.

6. Bande de roulement de pneu selon l'une des revendications 1 à 5 **caractérisée en ce que** la bande de roulement combine la présence d'une rainure principale (1) et de deux rainures secondaires discontinues (2, 2'), ces trois rainures ayant une même direction principale, la rainure principale (1) étant formée entre les deux rainures secondaires discontinues, ces deux rainures secondaires discontinues (2, 2') étant déphasées l'une par rapport à l'autre afin que leurs parties ouvertes (21, 21') sur la surface de roulement soient décalées les unes par rapport aux autres dans la direction principale de ces rainures secondaires discontinues (2, 2').

7. Pneu pour véhicule poids lourd pourvu d'une bande de roulement (10) selon l'une quelconque des revendications 1 à 6.

8. Pneu selon la revendication 7 destiné à équiper un essieu directeur d'un véhicule poids lourd.

## Patentansprüche

1. Laufstreifen (10) eines Reifens mit einer Lauffläche (100), die dazu bestimmt ist, mit einer Fahrbahn in Kontakt zu kommen, wobei dieser Laufstreifen (10) eine Gesamtdicke E hat und umfasst:
- mindestens eine Hauptrille (1), die sich im Neuzustand über ihre gesamte Länge auf der Lauffläche (100) des Streifens öffnet, wobei diese Rille eine Gesamttiefe P hat, die höchstens gleich der Gesamtdicke E des Streifens ist, und in der Nähe dieser Hauptrille
- mindestens eine diskontinuierliche Nebenrille (2), die sich in der Dicke des Streifens bis zu einer Tiefe gleich oder nahe der Tiefe P der Hauptrille (1) erstreckt, wobei diese diskontinuierliche Nebenrille (2) eine Vielzahl von im Neuzustand unter der Lauffläche verborgenen Teilen (22) und eine Vielzahl von im Neuzustand auf der Lauffläche offenen Teilen (21) aufweist, wobei diese offenen Teile im Neuzustand auf der Lauffläche untereinander unverbunden sind,
- wobei die Hauptrille (1) und die diskontinuierliche Nebenrille (2) jeweils eine mittlere Fläche haben, die als eine virtuelle Fläche definiert ist, die diese Rille entlang der Hauptrichtung dieser Rille in zwei gleiche oder im Wesentlichen gleiche Teile teilt,
- wobei die Hauptrille (1) und die diskontinuierliche Nebenrille (2) insgesamt identische Hauptrichtungen haben,
wobei dieser Laufstreifen **dadurch gekennzeichnet ist, dass** alle offenen Teile (21) der diskontinuierlichen Nebenrille (2) in einem mittleren Abstand L1 von der Hauptrille (1) liegen, wobei dieser Abstand L1 an den offenen Teilen (21) zwischen der mittleren Fläche der Hauptrille (1) und der mittleren Fläche der diskontinuierlichen Nebenrille (2) gemessen wird, wobei dieser Abstand L1 kleiner als der mittlere Abstand L2 ist, der zwischen der mittleren Fläche der Hauptrille (1) und der mittleren Fläche der diskontinuierlichen Rille (2) in den Regionen gemessen wird, die keine offenen Teile der diskontinuierlichen Nebenrille (2) aufweisen.

2. Laufstreifen eines Reifens nach Anspruch 1, **dadurch gekennzeichnet, dass** die Differenz zwischen den Abständen L2 und L1 mindestens 20 % der mittleren Breite der offenen Teile (21) der diskontinuierlichen Nebenrille (2) und noch bevorzugter mindestens 30 % beträgt.

3. Laufstreifen eines Reifens nach Anspruch 1 oder Anspruch 2, **dadurch gekennzeichnet, dass**, wenn man den Abstand zwischen den offenen Teilen (21) einer diskontinuierlichen Nebenrille (2) im Neuzustand als R und die mittlere Länge jedes offenen Teils (21) einer diskontinuierlichen Nebenrille (2) als L bezeichnet, die Länge L mindestens gleich der Hälfte des Abstands R ist.

4. Laufstreifen eines Reifens nach Anspruch 3, **dadurch gekennzeichnet, dass** die Länge L gleich oder nahe dem Abstand R ist.

5. Laufstreifen eines Reifens nach einem der Ansprüche 1 bis 4, **dadurch gekennzeichnet, dass** die diskontinuierliche Nebenrille (2) eine wellige Rille ist, die aus einer Vielzahl von im Neuzustand auf der Lauffläche (100) des Streifens offenen Teilen (21) und einer Vielzahl von verborgenen Teilen (22) gebildet wird, wobei diese verborgenen Teile (22) mit den offenen Teilen (21) durch Verbindungsteile verbunden sind, um im Neuzustand bei Regen das Herstellen eines Flüssigkeitsstroms in der diskontinuierlichen Nebenrille (2) zu ermöglichen.

6. Laufstreifen eines Reifens nach einem der Ansprüche 1 bis 5, **dadurch gekennzeichnet, dass** der Laufstreifen das Vorhandensein von einer Hauptrille (1) und von zwei diskontinuierlichen Nebenrillen (2, 2') kombiniert, wobei diese drei Rillen dieselbe Hauptrichtung haben, wobei die Hauptrille (1) zwischen den beiden diskontinuierlichen Nebenrillen ausgebildet ist, wobei diese diskontinuierlichen Nebenrillen (2, 2') zueinander verschoben sind, damit ihre offenen Teile (21, 21') auf der Lauffläche entlang der Hauptrichtung dieser diskontinuierlichen Nebenrillen (2, 2') zueinander versetzt sind.

7. Lkw-Reifen mit einem Laufstreifen (10) nach einem der Ansprüche 1 bis 6.

8. Reifen nach Anspruch 7, der zur Ausrüstung einer Lenkachse eines Lkw bestimmt ist.

## Claims

1. Tyre tread (10) comprising a tread surface (100) intended to come into contact with a roadway, this tread (10) having a total thickness E and comprising:
- at least one main groove (1) opening along its entire length when new onto the tread surface (100) of the tread, this groove having a total depth P at most equal to the total thickness E of the tread, and, in the vicinity of this main groove,
- at least one discontinuous secondary groove (2) extending in the thickness of the tread down to a depth equal or close to the depth P of the main groove (1), this discontinuous secondary groove (2) having a plurality of parts hidden (22) beneath the tread surface when new and a plurality of open parts (21) open onto the tread surface when new, these open parts being disjointed with respect to one another on the tread surface when new,
- the main groove (1) and the discontinuous secondary groove (2) each respectively having a mean surface defined as a virtual surface that divides this groove, in the main direction of this groove, into two equal or substantially equal parts,
- the main groove (1) and the discontinuous secondary groove (2) having roughly identical main directions,
this tread being **characterized in that** all the open parts (21) of the discontinuous secondary groove (2) are at a mean distance L1 from the main groove (1), this distance L1 being measured at the open parts (21) between the mean surface of the main groove (1) and the mean surface of the discontinuous secondary groove (2), this distance L1 is less than the mean distance L2 measured between the mean surface of the main groove (1) and the mean surface of the discontinuous groove (2) in the regions of the discontinuous secondary groove (2) that do not have open parts.

2. Tyre tread according to Claim 1, **characterized in that** the difference between the distances L2 and L1 is at least equal to 20% of the mean width of the open parts (21) of the discontinuous secondary groove (2) and, more preferably still, at least equal to 30%.

3. Tyre tread according to Claim 1 or Claim 2, **characterized in that** if the distance between the open parts (21) of a discontinuous secondary groove (2) when new is denoted R, and the mean length of each open part (21) of a discontinuous secondary groove (2) is denoted L, then the length L is at least equal to half the distance R.

4. Tyre tread according to Claim 3, **characterized in that** the length L is equal or close to the distance R.

5. Tyre tread according to one of Claims 1 to 4, **characterized in that** the discontinuous secondary groove (2) is an undulating groove formed of a plurality of parts (21) which are open when new onto the tread surface (100) of the tread and of a plurality of hidden parts (22), these hidden parts (22) being connected to the open parts (21) by connecting parts to allow, when new, a flow of fluid to become established in the discontinuous secondary groove (2) in wet weather.

6. Tyre tread according to one of Claims 1 to 5, **characterized in that** the tread combines the presence of a main groove (1) and of two discontinuous secondary grooves (2, 2'), these three grooves having the same main direction, the main groove (1) being formed between the two discontinuous secondary grooves, these two discontinuous secondary grooves (2, 2') being phase-shifted relative to one another so that their parts (21, 21') open onto the tread surface are offset with respect to one another in the main direction of these discontinuous secondary grooves (2, 2').

7. Heavy goods vehicle tyre provided with a tread (10) according to any one of Claims 1 to 6.

8. Tyre according to Claim 7 intended to be fitted to a steering axle of a heavy goods vehicle.
